# DEMANDE DE BREVET EUROPEEN

(11) **EP 4 821 606 A1**
(43) Date de publication de la demande: **14.10.2026**
(21) Numéro de dépôt: 26171098.2
(22) Date de dépôt: 08.04.2026
(51) Int. Cl.: B05B 1/30, B05B 15/65, B05B 7/08

(54) **DIAPHRAGME POUR DISPOSITIF D'APPLICATION D'UN PRODUIT DE REVÊTEMENT ET DISPOSITIF D'APPLICATION ASSOCIÉ**

(30) Priorité: 08.04.2025 FR 2503704
(71) Demandeur: Exel Industries, 51200 Epernay (FR)
(72) Inventeur: DOS SANTOS, Paulo, 93600 Aulnay-sous-Bois (FR); PINEAU, Alexandre Emmanuel Alain, 75016 Paris (FR); DEVINES, Pierre Shinji, 45140 Ingré (FR); BUATOIS, Pascal Laurent, 93130 Noisy le Sec (FR); MULLER, Philippe Bernard, 95270 Asnières sur Oise (FR)
(74) Mandataire: Lavoix

(57) **Abrégé**

La présente invention concerne un diaphragme (54) pour dispositif d'application d'un produit de revêtement, le diaphragme (54) comprenant un conduit (62) définissant un passage pour la circulation du produit, le conduit (62) s'étendant le long d'un axe central (B-B') entre une extrémité d'entrée (64) et une extrémité de sortie (66) et présentant une symétrie cylindrique autour de l'axe central (B-B').

Le conduit (62) comprend successivement un tronçon amont (70) et un tronçon aval (72). Le conduit (62) comprend un tronçon d'étranglement (74) disposé entre les tronçons amont et aval (70, 72) et ayant une section rétrécie par rapport à une section des tronçons amont et aval.

Les tronçons amont et aval présentent chacun une forme générale s'évasant, de préférence de manière convexe, depuis le tronçon d'étranglement (74) vers l'extrémité (64, 66) respective du conduit (62).

## Description

La présente invention concerne un diaphragme pour dispositif d'application, notamment pour pistolet pulvérisateur de produit de revêtement, une buse de pulvérisation comprenant un tel diaphragme et un dispositif d'application comprenant un tel diaphragme.

Des dispositifs d'application de produit de revêtement, tels que des pistolets pulvérisateurs, sont connus. Ils sont destinés à assurer l'éclatement d'un produit de revêtement en fines gouttelettes de manière à revêtir une grande surface avec une faible quantité de produit. À cet effet, le produit de revêtement est fourni sous pression par une source et conduit jusqu'à une buse de pulvérisation.

Plusieurs solutions existent pour effectuer cette pulvérisation.

On citera tout d'abord la pulvérisation pneumatique. Selon cette solution, le produit de revêtement est fourni par la source avec une surpression par rapport à la pression atmosphérique très faible, typiquement comprise entre 0,5 et 1,5 bars. De l'air comprimé est soufflé à la sortie de la buse et c'est principalement cet air comprimé qui vient atomiser le film liquide éjecté par la buse. Cette solution a l'avantage de présenter une très haute qualité de finition. Elle est en outre relativement bon marché. Elle a toutefois l'inconvénient de présenter un taux de transfert faible, une grande quantité du produit de revêtement étant dispersé dans l'environnement sans atteindre la surface à revêtir.

Une autre solution est constituée par la pulvérisation sans air. Selon cette solution, le produit de revêtement est fourni par la source à très haute pression, typiquement à une pression comprise entre 160 et 300 bars. C'est alors uniquement l'étroitesse de l'orifice de pulvérisation qui provoque l'éclatement du produit. Il n'y a pas d'air mis en jeu. Cette solution présente l'avantage d'un excellent taux de transfert. Elle a toutefois l'inconvénient de nécessiter des équipements de pompage capables de fournir le produit de revêtement à très haute pression, et implique une consommation énergétique coûteuse.

Une dernière solution est constituée par la pulvérisation mixte. Selon cette technologie, le produit de revêtement est fourni par la source à haute pression, typiquement à une pression comprise entre 50 et 150 bars. Tout comme dans le cas de la pulvérisation sans air, l'étroitesse de l'orifice de pulvérisation provoque l'éclatement du produit. Cette pulvérisation n'est toutefois pas optimale, compte-tenu de la pression relativement faible à laquelle le produit de revêtement est fourni par la source. Pour améliorer l'atomisation du produit, de l'air comprimé est soufflé à la sortie de la buse, comme dans la technologie de pulvérisation pneumatique. De l'air comprimé est également soufflé sur les extrémités du jet pour rabattre la peinture pulvérisée et éviter la formation de parties concentrées de peinture, appelées cornes, à ces pressions de produits. Cette solution permet d'obtenir sensiblement la même qualité de finition qu'avec la pulvérisation sans air, avec un bon taux de transfert, en étant plus économique puisque le produit de revêtement est fourni à une pression moindre. Elle présente toutefois l'inconvénient de rester relativement coûteuse par rapport à la solution de pulvérisation pneumatique.

Un objectif de l'invention est de réduire la pression à laquelle le produit de revêtement doit être fourni, tout en conservant des taux de transfert et des qualités de finition satisfaisants.

À cet effet, l'invention a pour objet un diaphragme pour dispositif d'application d'un produit de revêtement, le diaphragme comprenant un conduit définissant un passage pour la circulation du produit, le conduit s'étendant le long d'un axe central entre une extrémité d'entrée et une extrémité de sortie et présentant une symétrie cylindrique autour de l'axe central, le conduit comprenant successivement, entre l'extrémité d'entrée et l'extrémité de sortie, un tronçon amont et un tronçon aval, le conduit comprenant un tronçon d'étranglement disposé entre les tronçons amont et aval et ayant une section rétrécie par rapport à une section des tronçons amont et aval, les tronçons amont et aval présentant chacun une forme générale s'évasant, de préférence de manière convexe, depuis le tronçon d'étranglement vers l'extrémité respective du conduit.

La forme du diaphragme selon l'invention permet ainsi d'accélérer progressivement le produit en diminuant progressivement la section de passage dans le tronçon amont, de sorte que le produit circule à grande vitesse dans le tronçon d'étranglement de section constante, et enfin de diminuer progressivement la vitesse du produit en augmentant progressivement la section de passage dans le tronçon aval.

Le produit peut ainsi être pulvérisé avec une pression inférieure par rapport à un dispositif d'application classique, tout en conservant une bonne qualité de pulvérisation.

Il résulte de cette diminution de pression nécessaire une réduction de l'énergie requise et la possibilité d'emploi de matériels de pressurisation atteignant une pression plus faible, ce qui permet donc une double économie pour l'utilisateur en énergie et en matériel.

De plus, l'invention participe à réduire le volume de la zone susceptible d'être occupée par le produit sous pression après l'arrêt de la pulvérisation. Ainsi, le diaphragme permet de réduire le volume, aussi appelé volume « mort », entre le pointeau du dispositif d'application et la sortie de la buse

Par ailleurs, la restriction formée par le diaphragme participe à retenir le liquide dans ce volume « mort », afin que le liquide ne s'écoule pas et ne sorte pas de la buse, une fois la pulvérisation stoppée.

La forme arrondie des tronçons permet de limiter les pertes de charges et les turbulences, permettant ainsi d'avoir un flux de produit qui soit aussi laminaire que possible.

Il y a alors moins de turbulences dans la pulvérisation, de sorte que le taux de transfert du produit de pulvérisation est amélioré et une aspiration moindre est ainsi nécessaire dans la cabine de pulvérisation.

Le diaphragme selon l'invention permet ainsi de réduire la pression à laquelle le produit de revêtement doit être fourni, tout en maintenant des taux de transfert et des qualités de finition satisfaisants.

Suivant d'autres aspects avantageux de l'invention, le diaphragme peut comprendre une ou plusieurs des caractéristiques suivantes, prises isolément ou suivant toutes les combinaisons techniquement possibles :
- le tronçon d'étranglement présente une forme cylindrique de section constante ;
- au moins l'un du tronçon amont et du tronçon aval est tangent au tronçon d'étranglement ;
- le tronçon amont et le tronçon aval présentent chacun un rayon de courbure respectif, lesdits rayons de courbure étant constants ou variables ;
- le rayon de courbure du tronçon amont est différent du rayon de courbure du tronçon aval ;
- le rayon de courbure du tronçon aval est strictement supérieur au rayon de courbure du tronçon amont ;
- le tronçon amont comprend une portion d'entrée de forme tronconique ;
- le tronçon amont et le tronçon aval présentent chacun une longueur mesurée selon l'axe central telle que la longueur du tronçon amont est comprise entre 50 % et 100%, de préférence entre 70% et 90% de la longueur du tronçon aval ;
- le diaphragme comprend en outre un socle au niveau duquel le conduit débouche en son extrémité d'entrée ;
- le socle comprend au moins une encoche ou un relief caractéristique de la forme et/ou de la longueur du conduit.

L'invention concerne également une buse de pulvérisation pour dispositif d'application d'un produit de revêtement, ladite buse comprenant au moins un diaphragme du type précité.

Suivant d'autres aspects avantageux de l'invention, la buse peut présenter également une ou plusieurs des caractéristiques suivantes, prises isolément ou suivant toutes les combinaisons techniquement possibles :
- la buse comprend un corps tubulaire orienté suivant une direction axiale et définissant intérieurement un conduit traversant débouchant sur un orifice de pulvérisation apte à pulvériser le produit, la buse comprenant en outre un organe de pulvérisation définissant l'orifice de pulvérisation et comprenant, de l'amont vers l'aval, une cavité de section transversale décroissante vers l'aval, suivie d'un canal raccordant fluidiquement la cavité à l'orifice de pulvérisation, le diaphragme étant logé au moins en partie dans le conduit traversant de la buse ;
- le diaphragme est logé au moins en partie dans la cavité de l'organe de pulvérisation, de préférence de manière amovible ;
- le diaphragme est logé en amont de l'organe de pulvérisation, de préférence de manière amovible.

L'invention concerne également un dispositif d'application d'un produit de revêtement, tel qu'un pistolet, comportant une buse de pulvérisation, le dispositif d'application comprenant en outre au moins un diaphragme du type précité.

Suivant d'autres aspects avantageux de l'invention, le dispositif peut présenter également une ou plusieurs des caractéristiques suivantes, prises isolément ou suivant toutes les combinaisons techniquement possibles :
- la buse comprend un corps tubulaire orienté suivant une direction axiale et définissant intérieurement un conduit traversant débouchant sur un orifice de pulvérisation apte à pulvériser le produit, la buse comprenant en outre un organe de pulvérisation définissant l'orifice de pulvérisation et comprenant, de l'amont vers l'aval, une cavité de section transversale décroissante vers l'aval, suivie d'un canal raccordant fluidiquement la cavité à l'orifice de pulvérisation, le diaphragme étant logé au moins en partie dans le conduit traversant de la buse ;
- le diaphragme est logé au moins en partie dans la cavité de l'organe de pulvérisation, de préférence de manière amovible ;
- le diaphragme est logé en amont de l'organe de pulvérisation, de préférence de manière amovible ;
- le dispositif comprend un porte-siège propre à recevoir en appui la buse de pulvérisation, le porte-siège définissant le diaphragme.

L'invention apparaîtra plus clairement à la lecture de la description qui va suivre, donnée uniquement à titre d'exemple non limitatif, et faite en référence aux dessins dans lesquels :
[Fig. 1] la figure 1 est une vue éclatée et en perspective, de trois-quarts avant, d'un dispositif d'application d'un produit de revêtement selon un premier mode de réalisation de l'invention ;
[Fig. 2] la figure 2 est une vue en coupe longitudinale d'une buse de pulvérisation du dispositif de la figure 1, comprenant un diaphragme selon un premier mode de réalisation de l'invention ;
[Fig. 3] la figure 3 est une vue en perspective coupée du diaphragme de la figure 2 ;
[Fig. 4] la figure 4 est une vue agrandie du diaphragme de la figure 2 ;
[Fig. 5] la figure 5 est une vue en coupe longitudinale d'une tête de pulvérisation du dispositif de la figure 1, comprenant un diaphragme selon une variante du premier mode de réalisation de l'invention ;
[Fig. 6] la figure 6 est une vue en coupe longitudinale partielle du dispositif d'application de la figure 1 selon un deuxième mode de réalisation ;
[Fig. 7] la figure 7 est une vue en coupe longitudinale partielle du dispositif d'application de la figure 1 selon une variante du deuxième mode de réalisation.

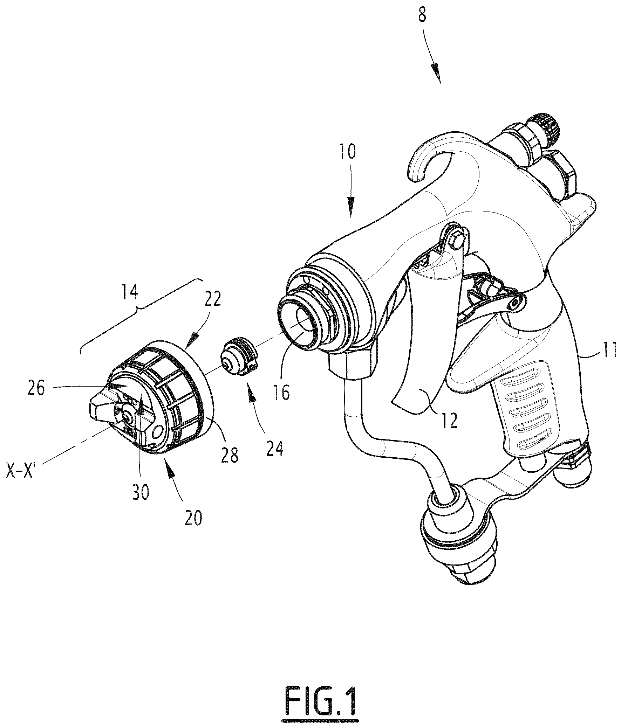

Sur la figure 1 est représenté un dispositif 8 d'application d'un produit de revêtement selon un premier mode de réalisation.

Le dispositif 8 d'application est destiné à appliquer le produit de revêtement sur une surface à revêtir. Le produit de revêtement est de préférence un fluide, par exemple un liquide comprenant un ou plusieurs composants ou un matériau pulvérulent. Il peut s'agir de peinture, d'un apprêt, d'un vernis, etc...

Dans la suite, les termes d'orientation « amont » et « aval » s'entendent en référence au sens de circulation du produit du revêtement dans le dispositif 8, ledit produit de revêtement s'écoulant de l'amont vers l'aval.

Dans l'exemple de la figure 1, le dispositif 8 d'application est un pistolet de pulvérisation, en particulier un pistolet de pulvérisation manuel. En variante, le pistolet de pulvérisation est un pistolet de pulvérisation automatique.

Le dispositif 8 comprend un corps 10, une crosse de préhension 11 et une gâchette d'actionnement 12 articulée sur le corps 10. Le dispositif 8 comprend également une tête 14 de pulvérisation montée sur le corps 10.

Le corps 10 présente un orifice 16 de sortie du produit de revêtement.

La tête 14 de pulvérisation est centrée sur un axe de pulvérisation X-X' du dispositif 8.

La tête 14 de pulvérisation comprend une bague annulaire 20 présentant un orifice central 22, et une buse 24 de pulvérisation logée dans ledit orifice central 22.

La bague 20 annulaire est centrée sur l'axe X-X'. La bague 20 comprend un corps 26 définissant l'orifice central 22, et une jupe 28 montée rotative autour de l'axe X-X' relativement au corps 26.

Comme visible sur la Figure 1, le corps 26 présente une face aval 30, orientée à l'opposé du corps 10, et une face amont (non visible) faisant face au corps 10.

La buse 24 de pulvérisation est disposée coaxialement à l'intérieur de la tête 14.

La tête 14 de pulvérisation et la buse 24 sont configurées pour être montées sur un porte siège (non représenté sur la figure 1), lui-même monté sur le corps 10 du dispositif 8.

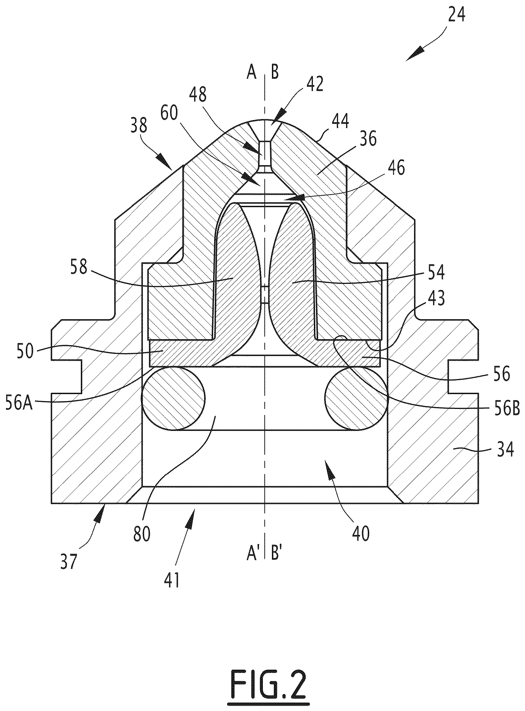

En référence à la figure 2, la buse 24 comprend un corps 34 tubulaire orienté suivant une direction axiale A-A', confondu avec l'axe de pulvérisation X-X' lorsque la buse 24 est montée à l'intérieur de la tête 14. La buse 24 comprend en outre un organe de pulvérisation 36 disposé à l'intérieur du corps 34.

Le corps 34 de la buse 24 est en particulier cylindrique de révolution autour dudit axe A-A'.

Le corps 34 de la buse 24 présente une extrémité amont 37, orientée vers le corps 10 du dispositif 8, et une extrémité aval 38, orientée à l'opposé du corps 10.

Le corps 34 définit intérieurement un conduit 40 traversant définissant un passage pour la circulation du produit de revêtement à travers la buse 24. Le conduit 40 débouche à l'extérieur du corps 34, à l'extrémité amont 37, sur un orifice de raccordement 41 large, et à l'extrémité aval 38 sur un orifice de pulvérisation 42 apte à pulvériser le produit,

L'organe de pulvérisation 36 est inséré en partie dans le conduit 40.

L'organe de pulvérisation 36 présente une face amont 43, logée dans le conduit 40, et une face aval 44, opposée à la face amont 43 et disposée hors du corps 34.

La face amont 43 est sensiblement plane et est disposée sensiblement transversalement à l'axe A-A'.

La face aval 44 est typiquement en forme de dôme centré sur l'axe A-A' et affleure à sa périphérie l'extrémité aval 38 du conduit 40.

L'organe de pulvérisation 36 définit l'orifice de pulvérisation 42 au niveau de sa face aval 44.

L'organe de pulvérisation 36 comprend par ailleurs, de l'amont vers l'aval, une cavité 46 de section transversale décroissante vers l'aval, suivie d'un canal 48 de section transversale sensiblement constante raccordant fluidiquement la cavité 46 à l'orifice de pulvérisation 42.

La cavité 46 débouche dans la face amont 43, ladite face amont 43 définissant, autour de la cavité 46, un épaulement 50 annulaire orienté vers l'amont.

Dans l'exemple de la figure 2, la cavité 46 présente sensiblement une forme de cloche.

Le canal 48 débouche sur une ouverture formant l'orifice de pulvérisation 42.

Le dispositif 8 d'application comprend en outre au moins un diaphragme 54.

Un diaphragme 54 selon un premier mode de réalisation est représenté sur les figures 2 à 4.

De préférence, le diaphragme 54 est formé d'une seule pièce.

Comme visible sur la figure 2, le diaphragme 54 selon le premier mode de réalisation est logé dans le conduit 40 traversant de la buse 24. En particulier, le diaphragme 54 est logé en partie dans la cavité 46 de l'organe de pulvérisation 36, de préférence de manière amovible.

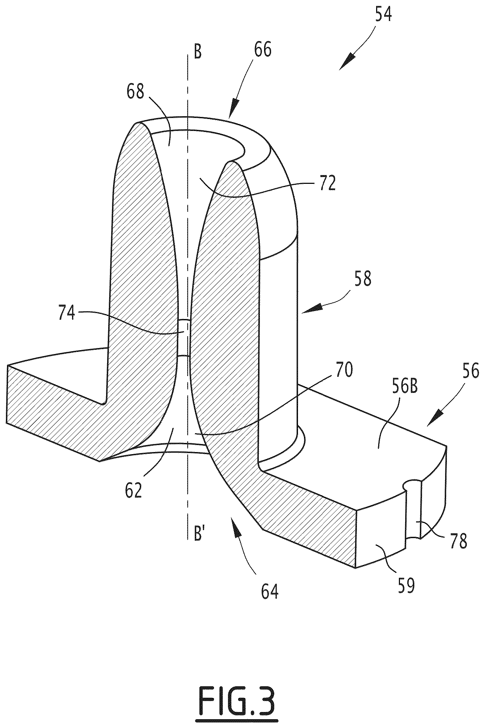

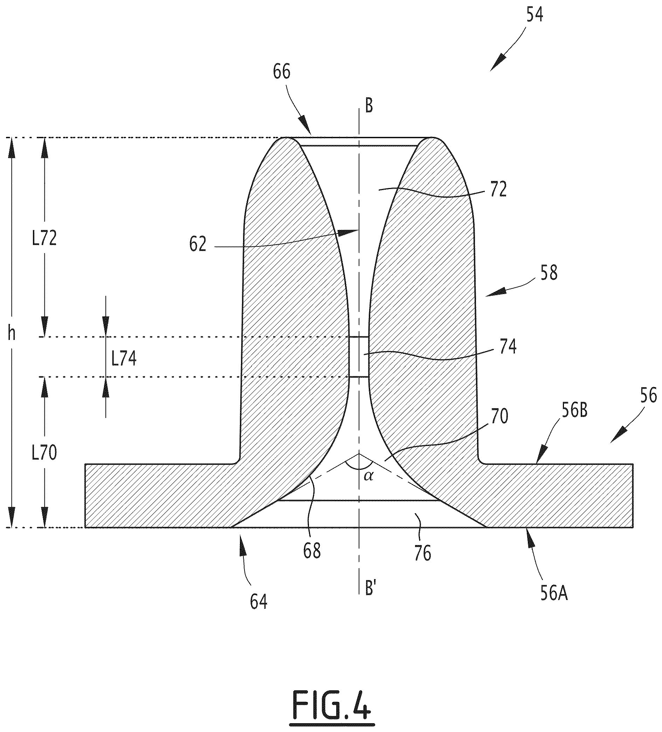

En référence aux figures 3 et 4, le diaphragme 54 comprend un socle 56 et un corps d'insert 58 faisant saillie axialement depuis le socle 56 suivant un axe central B-B', confondu avec l'axe longitudinal A-A' lorsque le diaphragme 54 est monté à l'intérieur de la buse 24.

Le socle 56 est logé dans le conduit 40 traversant de la buse 24, à l'extérieur de la cavité 46 de l'organe de pulvérisation 36. Avantageusement, comme visible sur la figure 2, le socle 56 est en appui contre l'épaulement 50 annulaire au niveau d'une face aval 56B du socle 56. Le socle 56 définit par ailleurs une face amont 56A, opposée à la face aval 56B.

De préférence, comme visible sur la figure 3 en coupe, le socle 52 présente au moins un, en particulier deux, méplat(s) 59, pour permettre la préhension du diaphragme 54 et son retrait de la buse 24.

De préférence, comme visible sur la figure 2, le corps d'insert 58 est reçu intégralement dans la cavité 46. Le corps d'insert 58 présente de préférence une forme sensiblement complémentaire à celle de la cavité 46, de sorte que, lorsque le corps d'insert 58 est reçu intégralement dans la cavité 46, on définit un espace libre 60 entre le corps d'insert 58 et une paroi interne de la cavité 46, ledit espace libre 60 présentant un volume inférieur au volume de la cavité 46. Le volume de stagnation du produit est ainsi réduit.

Le corps d'insert 58 comprend un conduit 62 définissant un passage pour la circulation du produit. Le conduit 62 s'étend le long de l'axe central B-B' entre une extrémité d'entrée 64 et une extrémité de sortie 66, formant une extrémité libre du corps d'insert 58.

Le conduit 62 débouche en son extrémité d'entrée 64 au niveau du socle 52. Le conduit 62 est délimitée par une surface intérieure 68 du corps d'insert 58.

De préférence, le conduit 62 présente une hauteur h, mesurée le long de l'axe central B-B' entre l'extrémité d'entrée 64 et l'extrémité de sortie 66, comprise entre 3 mm et 12 mm, de préférence encore entre 3,5 mm et 6 mm.

Le corps d'insert 58 présente avantageusement une symétrie cylindrique autour de l'axe central B-B'.

On définit une section transversale du conduit 62 comme une section du conduit 62 selon un plan transversal normal à l'axe central B-B'

Dans le mode de réalisation illustré sur les figures 2 à 4, le conduit 62 présente des sections transversales sensiblement rondes.

Comme représenté sur les figures 3 et 4, le conduit 62 comprend successivement, entre l'extrémité d'entrée 64 et l'extrémité de sortie 66, un tronçon amont 70 et un tronçon aval 72. Le conduit 62 comprend en outre un tronçon d'étranglement 74 disposé entre les tronçons amont et aval 70, 72.

De l'amont vers l'aval, le conduit 62 comprend ainsi le tronçon amont 70, le tronçon d'étranglement 74 et le tronçon aval 72.

Le tronçon d'étranglement 74 présente une section transversale rétrécie par rapport aux sections transversales des tronçons amont et aval 70, 72.

Le conduit 62 présente ainsi un diamètre intérieur variant entre l'extrémité d'entrée 64 et l'extrémité de sortie 66. Ainsi, le diamètre intérieur diminue progressivement de l'extrémité d'entrée 64 jusqu'au tronçon d'étranglement 74, puis augmente du tronçon d'étranglement 74 jusqu'à l'extrémité de sortie 66.

Le tronçon amont 70 définit ainsi un tube convergent, l'extrémité d'entrée 64 ayant un diamètre supérieur au diamètre du tronçon d'étranglement 74. Le tronçon aval 72 définit un tube divergent, l'extrémité de sortie 66 ayant un diamètre supérieur au diamètre du tronçon d'étranglement 74. Les tubes convergent et divergent sont coaxiaux.

Un rapport entre le diamètre de la section transversale du tronçon amont 70 au niveau du tronçon d'étranglement 74 et le diamètre de la section transversale du tronçon amont 70 au niveau de l'extrémité d'entrée 64 est de préférence compris entre 0.05 et 0.35, de préférence entre 0.07 et 0.22.

Par exemple, le tronçon amont 70 présente un diamètre compris entre 2,0 mm et 6,0 mm, de préférence entre 2,5 mm et 4,0 mm, au niveau de l'extrémité d'entrée 64, et un diamètre compris entre 0,15 mm et 1,0 mm, de préférence entre 0,15 mm et 0,7 mm, au niveau du tronçon d'étranglement 74.

Un rapport entre le diamètre de la section transversale du tronçon aval 72 au niveau du tronçon d'étranglement 74 et le diamètre de la section transversale du tronçon aval 72 au niveau de l'extrémité de sortie 66 est de préférence compris entre 0,1 et 0,40.

Par exemple, le tronçon aval 72 présente un diamètre compris entre 0,5 mm et 7,0 mm au niveau de l'extrémité de sortie 66, et un diamètre compris entre 0,15 mm et 1,0 mm, de préférence entre 0,15 mm et 0,7 mm, au niveau du tronçon d'étranglement 74.

Selon un mode de réalisation particulier (non représenté), le tronçon amont 70 et le tronçon aval 72 sont symétriques entre eux par rapport à un plan médian, le conduit 62 présentant sensiblement la forme d'une caténoïde.

De préférence, comme visible sur les figures 2 à 4, le tronçon amont 70 et le tronçon aval 72 ne sont pas symétriques entre eux.

Le tronçon amont 70 et le tronçon aval 72 présentent chacun une longueur L70, L72 respective mesurée selon l'axe central B-B'. De préférence, la longueur L70 du tronçon amont 70 est inférieure à la longueur L72 du tronçon aval 72.

De préférence, la longueur L70 du tronçon amont 70 représente entre 50% et 100%, de préférence entre 70% et 90%, de la longueur L72 du tronçon aval 72.

Typiquement, le tronçon amont 70 présente une longueur L70 comprise entre 1,4 mm et 6,0 mm et le tronçon aval 73 présente une longueur L72 comprise entre 1,6 mm et 7,0mm.

Comme visible sur les figures 3 et 4, les tronçons amont et aval 70, 72 présentent chacun une forme générale s'évasant depuis le tronçon d'étranglement 74 vers l'extrémité 64, 66 du conduit 62 respective.

Avantageusement, comme visible plus en détails sur les figures 3 et 4, les tronçons amont et aval 70, 72 présentent chacun une forme générale s'évasant de manière convexe depuis le tronçon d'étranglement 74 jusqu'à l'extrémité 64, 66 du conduit 62 respective.

Le tronçon amont 70 présente ainsi avantageusement une forme arrondie s'évasant depuis le tronçon d'étranglement 74 vers l'extrémité d'entrée 64.

De préférence, comme visible sur la figure 4, le tronçon amont 70 comprend une portion d'entrée 76 de forme tronconique, débouchant au niveau de la face 56A amont du socle 56. La portion d'entrée 76 permet d'éviter une diminution de section du conduit 62 trop abrupte, tout en ayant une extrémité d'entrée 64 de diamètre adapté.

Avantageusement, la portion d'entrée 76 est tangente avec le reste du tronçon amont 70 et la surface intérieure 68 du tronçon amont 70 ne présente pas d'arête.

De préférence, la portion d'entrée 76 définit un angle de convergence α compris entre 90° et 150°, préférentiellement entre 120° et 150°.

Le tronçon amont 70 permet ainsi d'accélérer le produit régulièrement, sur une courte distance, par une diminution régulière de la section de passage. Cette diminution se fait avantageusement sans à coup, en partant d'un diamètre similaire au diamètre d'une conduite d'amenée du produit.

Le tronçon aval 72 présente avantageusement une forme arrondie s'évasant depuis le tronçon d'étranglement 74 vers l'extrémité de sortie 66.

L'arrondi du tronçon aval 72 permet de bénéficier de l'effet Coanda. Le flux de produit est ainsi le plus large et le moins perturbé possible, ce qui limite les effets de cavitation ou de stagnation de produit. La sortie évasée permet ainsi de limiter les turbulences, permettant à la fois de limiter les pertes de charges et l'effet de micro-bullage du produit projeté.

Le tronçon amont 70 et le tronçon aval 72 présentent ainsi chacun une forme de pavillon de trompette. Les formes arrondies des tronçons amont 70 et aval 72 permettent de limiter les pertes de charges, ainsi que les turbulences de manière à avoir un flux laminaire.

Le conduit 62 présente une forme en double entonnoir.

Le diaphragme 54, avec la réduction puis l'agrandissement de la section du conduit 62 avant le canal 48 de l'organe de pulvérisation 36, permet de bénéficier d'un effet de double restriction et ainsi de diminuer la pression de produit nécessaire à la pulvérisation.

De plus, la forme en double entonnoir facilite le nettoyage du conduit 62 et ainsi l'élimination de toute impureté nuisible à la pulvérisation.

Le tronçon amont 70 et le tronçon aval 72 présentent chacun un rayon de courbure respectif. Il n'est pas tenu compte ici de la présence éventuelle d'une portion d'entrée 76 tronconique.

Dans le mode de réalisation des figures 2 à 4, les rayons de courbure des tronçons amont et aval 70, 72 sont constants. Ainsi, la courbure de la surface intérieure 68 au niveau du tronçon amont 70 est une courbe simple avec un rayon constant et la courbure de la surface intérieure 68 au niveau du tronçon aval 72 est une courbe simple avec un rayon constant.

En variante non représentée, au moins l'une des rayons de courbure est variable. Dans ce cas, au moins l'un du tronçon amont 70 et du tronçon aval 72 comprend une succession de portions de rayon de courbure variable, qui sont chacune tangente avec la portion précédente et/ou avec la portion suivante.

Avantageusement, le rayon de courbure du tronçon amont 70 est différent du rayon de courbure du tronçon aval 72.

De préférence, comme visible sur la figure 4, le rayon de courbure du tronçon aval 72 est strictement supérieur au rayon de courbure du tronçon amont 70.

Cela permet d'avoir une décélération du flux du produit qui soit plus progressive que son accélération.

Par exemple, le rayon de courbure du tronçon amont 70 est compris entre 0,5 mm et 4,0 mm, de préférence entre 1,2 mm et 2,0 mm.

Par exemple, le rayon de courbure R72 du tronçon aval 72 est compris entre 2,0 mm et 6,0 mm.

De préférence, au moins l'un du tronçon amont 70 et du tronçon aval 72 est tangent au tronçon d'étranglement 74. Encore préférentiellement, le tronçon amont 70 et le tronçon aval 72 sont tous les deux tangents au tronçon d'étranglement 74, de sorte que la surface intérieure 68 du conduit 62 est dépourvue de discontinuité entre l'extrémité d'entrée 64 et l'extrémité de sortie 66. On entend par cela que la surface intérieure 68 du conduit 62 ne présente pas d'arête entre les différents tronçons.

Le tronçon d'étranglement 74 définit un rétrécissement du conduit 62.

Cette restriction est la zone où la vitesse de circulation du produit est la plus grande.

Comme visible sur les figures 2 à 4, le tronçon d'étranglement 74 présente de préférence une forme cylindrique de section constante, centré sur l'axe central B-B'.

La longueur du tronçon d'étranglement 74 est choisie de manière à réduire le phénomène de micro-bullage dans le produit projeté, tout en limitant les pertes de charge.

De préférence, le tronçon d'étranglement 74 présente une longueur L74 mesurée selon l'axe central B-B, comprise entre 0,30 mm et 2,0 mm.

De préférence, le tronçon d'étranglement 74 présente un diamètre compris entre 0,15 mm et 1,0 mm, de préférence entre 0,15 mm et 0,7 mm.

La réduction de la section transversale au niveau du tronçon amont 70, et optionnellement de la portion d'entrée 76, permet une accélération progressive du produit Au niveau du tronçon d'étranglement 74, la section transversale constante du conduit 62 permet un déplacement du produit à haute vitesse, tandis que l'agrandissement de la section transversale au niveau du tronçon aval 72 permet une décélération du produit.

Cela contribue à la réduction de pression nécessaire pour la pulvérisation, notamment en diminuant la viscosité du produit par effet sur la propriété rhéofluidisante des produits, notamment des peintures.

La réduction de la section transversale au niveau du tronçon d'étranglement 74 permet, en plus du déplacement rapide du produit, une réduction locale de la pression statique, participant à l'effet global de réduction de pression pour la pulvérisation, notamment en diminuant la viscosité du produit par effet sur la propriété thixotrope des produits, notamment des peintures.

De préférence, le diaphragme 54 présente au moins une encoche 78 ou un relief, par exemple au niveau de son socle 56, caractéristique de la forme et/ou de la longueur du conduit 62. Par exemple, la forme et/ou la position de l'encoche 78 ou du relief dépend de la forme et/ou de la longueur du conduit 62. Cela permet une identification rapide du diaphragme, sans qu'il ne soit nécessaire d'effectuer des mesures.

De préférence, le diaphragme 54 est réalisé dans un matériau métallique. Par exemple, le diaphragme 54 est réalisé en oxyde métallique, notamment en oxyde de zirconium ZrO₂ (aussi appelé zircone).

Comme visible sur la figure 2, la buse 24 de pulvérisation comprend avantageusement un joint 80 d'étanchéité, par exemple un joint torique, disposé dans le conduit 40. Le joint 80 prend ici appui sur la face amont 56A.

Le fonctionnement du dispositif 8 d'application selon le premier mode de réalisation va à présent être décrit.

Un utilisateur actionne la gâchette d'actionnement 12 de manière à alimenter la tête 14 de pulvérisation en produit.

Le produit de revêtement, arrivant sous pression, pénètre dans le conduit 40 de la buse 24, puis passe à travers le conduit 62 du diaphragme 54, en traversant successivement le tronçon amont 70, le tronçon d'étranglement 74 et le tronçon aval 72.

La réduction de section au niveau du tronçon amont 70 permet une accélération du produit de pulvérisation, qui circule alors rapidement dans le tronçon d'étranglement 74, avant de décélérer dans le tronçon aval 72.

Puis, le produit sort du conduit 62 et arrive dans la cavité 46, au niveau de l'espace libre 60, avant de passer dans le canal 48 et de sortir de la buse 24 par l'orifice de pulvérisation 42

Le produit de revêtement se disperse alors sous forme de gouttelettes dans l'espace en sortie de la buse 24. Malgré la relativement faible pression d'alimentation en produit de revêtement, on obtient une excellente dispersion du produit de revêtement, au moins semblable à celle que l'on peut observer habituellement avec les pressions d'alimentation classiques.

Le dispositif 8 d'application selon l'invention permet ainsi d'obtenir une qualité de finition et un taux de transfert semblables, voire meilleurs que ceux rencontrés habituellement, avec toutefois une pression d'alimentation en produit de revêtement réduite.

Par ailleurs, la compacité du diaphragme 54 et son insertion dans l'organe de pulvérisation 36 permet de minimiser les volumes morts et, ainsi, évite des écoulements non désirés au relâchement de la gâchette 12, en particulier lors de l'utilisation de produits très fluides.

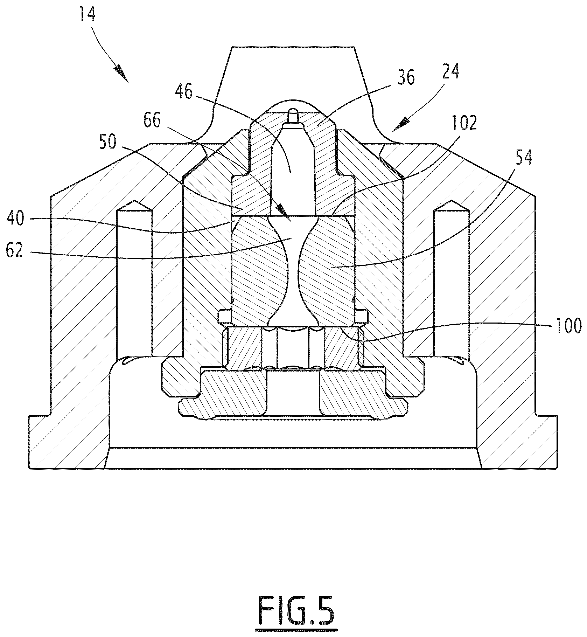

La figure 5 représente une tête 14 de pulvérisation comprenant une buse 24 selon une variante du premier mode de réalisation. Dans ce qui suit, seules les différences par rapport au premier mode de réalisation sont mentionnées par souci de concision. En outre, les éléments analogues ou identiques à ceux du premier mode de réalisation déjà décrit conservent leurs références numériques, alors que les autres éléments portent d'autres références numériques.

Selon cette variante, le diaphragme 54 est disposé en amont de de l'organe de pulvérisation 36, de préférence de manière amovible. Le diaphragme 54 est ainsi disposé en dehors de la cavité 46.

Le diaphragme 54 présente de préférence une forme sensiblement complémentaire à la forme interne du conduit 40 traversant de la buse 24.

Le diaphragme 54 comprend une face amont 100 et une face aval 102 opposée, la face aval 102 prenant avantageusement appui contre l'organe de pulvérisation 36, et en particulier contre l'épaulement 50.

Le conduit 62 du diaphragme 54 débouche au niveau de son extrémité de sortie 66 dans la cavité 46.

Le diaphragme 54 peut présenter un corps n'ayant pas une forme complémentaire à celle de la cavité 46 de l'organe de pulvérisation 36. Un tel diaphragme 54 peut ainsi s'adapter facilement à différents organes 36 de pulvérisation.

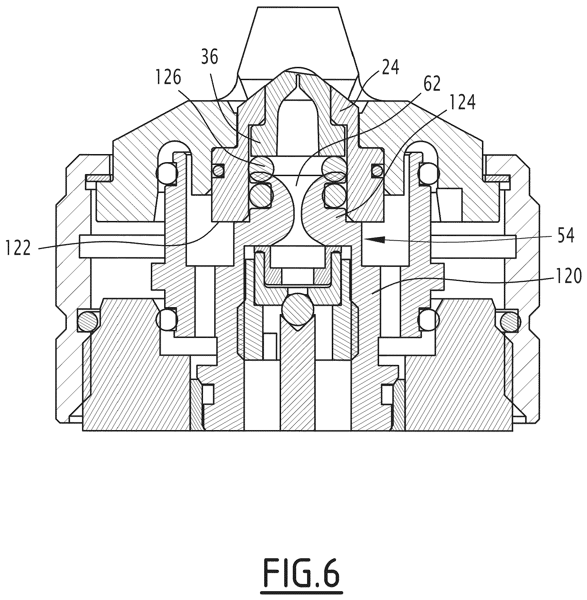

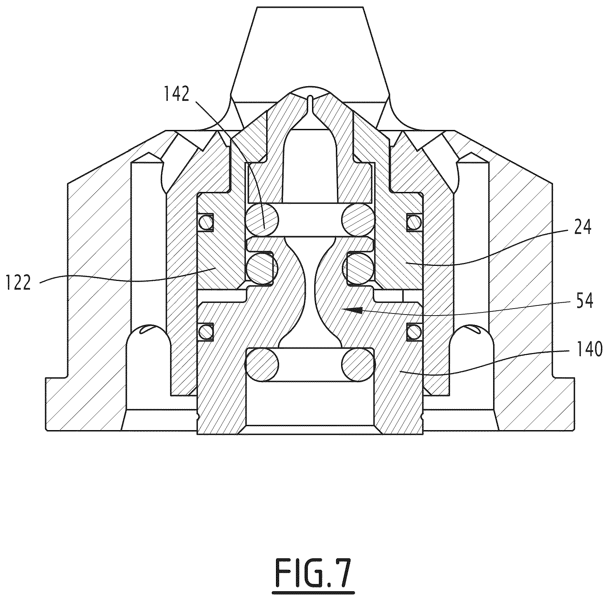

Les figures 6 et 7 représentent un dispositif 8 d'application selon un deuxième mode de réalisation. Dans ce qui suit, seules les différences par rapport au premier mode de réalisation sont mentionnées par souci de concision. En outre, les éléments analogues ou identiques à ceux du premier mode de réalisation conservent leurs références numériques, alors que les autres éléments portent d'autres références numériques.

Dans ce deuxième mode de réalisation, le diaphragme 54 est disposé au moins en partie en dehors du conduit 40 de la buse 24, en amont de l'organe de pulvérisation 36, de préférence de manière amovible.

Le dispositif 8 comporte un porte siège 120, monté sur le corps 10 du dispositif 8, et destiné à recevoir en appui un siège 122 de la buse 24 de pulvérisation.

Selon une première variante du deuxième mode de réalisation, représenté sur la figure 6, le porte-siège 120 définit directement le diaphragme 54.

Ainsi, le porte-siège 120 présente une extrémité aval 124, ladite extrémité aval 124 définissant le conduit 62 en double entonnoir.

L'extrémité aval 124 est ici reçu en partie dans le conduit 40 lorsque la buse 24 est montée sur le corps 20 du dispositif 8.

De préférence, un joint 126 d'étanchéité, ici un joint torique, est plaqué entre l'extrémité aval 124 du porte-siège 120 et l'organe de pulvérisation 36.

Selon une deuxième variante de ce deuxième mode de réalisation, représentée sur la figure 7, le diaphragme 54 est formé d'une pièce intermédiaire 140, elle-même destinée à être montée sur le porte-siège (non visible sur la figure 7), de manière être disposée entre le porte-siège et la buse 24 de pulvérisation.

La pièce intermédiaire 140 définit ainsi le conduit 62 en double entonnoir.

La pièce intermédiaire 140 est avantageusement amovible.

La pièce intermédiaire 140 formant le diaphragme est reçue en partie dans le conduit 40 et prend de préférence appui contre un joint 142 qui est alors plaqué contre l'organe de pulvérisation 36.

Selon un autre mode de réalisation (non représenté), le dispositif 8 d'application comprend plusieurs diaphragmes 54 tels que définis ci-dessus. Par exemple, le dispositif 8 d'application comprend un premier diaphragme 54 sous forme d'insert logé dans la cavité 46, et un deuxième diaphragme 50 formé par l'extrémité aval 124 du porte-siège 120.

Selon une variante non représentée, le tronçon d'étranglement 74 forme un rétrécissement localisé au niveau d'un plan correspondant à la jonction entre les tronçons amont 70 et aval 72.

Selon une variante non représentée, le tronçon amont 70 et/ou le tronçon aval 72 s'évase de manière rectiligne depuis le tronçon d'étranglement 74 vers l'extrémité 64, 66 du conduit 62 respective. Le rayon de courbure dudit tronçon est alors infini.

Les caractéristiques des variantes et des modes de réalisation envisagées ci-dessus peuvent être combinées entre elles pour générer de nouveaux modes de réalisation de l'invention.

## Revendications

1. Diaphragme (54) pour dispositif (8) d'application d'un produit de revêtement, le diaphragme (54) comprenant un conduit (62) définissant un passage pour la circulation du produit, le conduit (62) s'étendant le long d'un axe central (B-B') entre une extrémité d'entrée (64) et une extrémité de sortie (66) et présentant une symétrie cylindrique autour de l'axe central (B-B'),
le conduit (62) comprenant successivement, entre l'extrémité d'entrée (64) et l'extrémité de sortie (66), un tronçon amont (70) et un tronçon aval (72),
le conduit (62) comprenant un tronçon d'étranglement (74) disposé entre les tronçons amont et aval (70, 72) et ayant une section rétrécie par rapport à une section des tronçons amont et aval (70, 72),
les tronçons amont et aval (70, 72) présentant chacun une forme générale s'évasant, de préférence de manière convexe, depuis le tronçon d'étranglement (74) vers l'extrémité (64, 66) respective du conduit (62).

2. Diaphragme (54) selon la revendication 1, dans lequel le tronçon d'étranglement (74) présente une forme cylindrique de section constante.

3. Diaphragme (54) selon la revendication 1 ou 2, dans lequel au moins l'un du tronçon amont (70) et du tronçon aval (72) est tangent au tronçon d'étranglement (74).

4. Diaphragme (54) selon l'une quelconque des revendications précédentes, dans lequel le tronçon amont (70) et le tronçon aval (72) présentent chacun un rayon de courbure respectif, lesdits rayons de courbure étant constants ou variables.

5. Diaphragme (54) selon la revendication 4, dans lequel le rayon de courbure du tronçon amont (70) est différent du rayon de courbure du tronçon aval (72).

6. Diaphragme (54) selon la revendication 5, dans lequel le rayon de courbure du tronçon aval (72) est strictement supérieur au rayon de courbure du tronçon amont (70).

7. Diaphragme (54) selon l'une quelconque des revendications précédentes, dans lequel le tronçon amont (70) comprend une portion d'entrée (76) de forme tronconique.

8. Diaphragme (54) selon l'une quelconque des revendications précédentes, dans lequel le tronçon amont (70) et le tronçon aval (72) présentent chacun une longueur (L70, L72) mesurée selon l'axe central (B-B') telle que la longueur du tronçon amont (70) est comprise entre 50 % et 100%, de préférence entre 70% et 90% de la longueur du tronçon aval (72).

9. Diaphragme (54) selon l'une quelconque des revendications précédentes, comprenant en outre un socle (56) au niveau duquel le conduit (62) débouche en son extrémité d'entrée (64).

10. Diaphragme (54) selon la revendication 9, dans lequel le socle (56) comprend au moins une encoche (78) ou un relief caractéristique de la forme et/ou de la longueur du conduit (62).

11. Buse (24) de pulvérisation pour dispositif (8) d'application d'un produit de revêtement, tel qu'un pistolet, la buse (24) comprenant au moins un diaphragme (54) selon l'une quelconque des revendications précédentes.

12. Buse (24) selon la revendication 11, comprenant un corps (34) tubulaire orienté suivant une direction axiale (A-A') et définissant intérieurement un conduit (40) traversant débouchant sur un orifice de pulvérisation (42) apte à pulvériser le produit,
la buse (24) comprenant en outre un organe de pulvérisation (36) définissant l'orifice de pulvérisation (42) et comprenant, de l'amont vers l'aval, une cavité (46) de section transversale décroissante vers l'aval, suivie d'un canal (48) raccordant fluidiquement la cavité (46) à l'orifice de pulvérisation (42),
le diaphragme (54) étant logé au moins en partie dans le conduit (40) traversant de la buse (24).

13. Buse (24) selon la revendication 12, dans laquelle le diaphragme (54) est logé au moins en partie dans la cavité (46) de l'organe de pulvérisation (36), de préférence de manière amovible.

14. Buse (24) selon la revendication 12, dans laquelle le diaphragme (54) est logé en amont de l'organe de pulvérisation (36), de préférence de manière amovible.

15. Dispositif (8) d'application d'un produit de revêtement, tel qu'un pistolet, comportant une buse (24) de pulvérisation, le dispositif (8) d'application comprenant en outre au moins un diaphragme (54) selon l'une quelconque des revendications 1 à 10.

16. Dispositif (8) selon la revendication 15, dans lequel la buse (24) est selon l'une quelconque des revendications 11 à 14.

17. Dispositif (8) selon la revendication 15, comprenant un porte-siège (120) propre à recevoir en appui la buse (24) de pulvérisation, le porte-siège (120) définissant le diaphragme (54).

## Revendications modifiées

### Revendications modifiées conformément à la règle 137(2) CBE.

1. Buse (24) de pulvérisation pour dispositif (8) d'application d'un produit de revêtement, tel qu'un pistolet, la buse (24) comprenant au moins un diaphragme (54) pour dispositif (8) d'application d'un produit de revêtement, le diaphragme (54) comprenant un conduit (62) définissant un passage pour la circulation du produit, le conduit (62) s'étendant le long d'un axe central (B-B') entre une extrémité d'entrée (64) et une extrémité de sortie (66) et présentant une symétrie cylindrique autour de l'axe central (B-B'),
le conduit (62) comprenant successivement, entre l'extrémité d'entrée (64) et l'extrémité de sortie (66), un tronçon amont (70) et un tronçon aval (72),
le conduit (62) comprenant un tronçon d'étranglement (74) disposé entre les tronçons amont et aval (70, 72) et ayant une section rétrécie par rapport à une section des tronçons amont et aval (70, 72),
les tronçons amont et aval (70, 72) présentant chacun une forme générale s'évasant de manière convexe depuis le tronçon d'étranglement (74) vers l'extrémité (64, 66) respective du conduit (62).

2. Buse (24) selon la revendication 1, dans laquelle le tronçon d'étranglement (74) présente une forme cylindrique de section constante.

3. Buse (24) selon la revendication 1 ou 2, dans laquelle au moins l'un du tronçon amont (70) et du tronçon aval (72) est tangent au tronçon d'étranglement (74).

4. Buse (24) selon l'une quelconque des revendications précédentes, dans laquelle le tronçon amont (70) et le tronçon aval (72) présentent chacun un rayon de courbure respectif, lesdits rayons de courbure étant constants ou variables.

5. Buse (24) selon la revendication 4, dans laquelle le rayon de courbure du tronçon amont (70) est différent du rayon de courbure du tronçon aval (72).

6. Buse (24) selon la revendication 5, dans laquelle le rayon de courbure du tronçon aval (72) est strictement supérieur au rayon de courbure du tronçon amont (70).

7. Buse (24) selon l'une quelconque des revendications précédentes, dans laquelle le tronçon amont (70) comprend une portion d'entrée (76) de forme tronconique.

8. Buse (24) selon l'une quelconque des revendications précédentes, dans laquelle le tronçon amont (70) et le tronçon aval (72) présentent chacun une longueur (L70, L72) mesurée selon l'axe central (B-B') telle que la longueur du tronçon amont (70) est comprise entre 50 % et 100%, de préférence entre 70% et 90% de la longueur du tronçon aval (72).

9. Buse (24) selon l'une quelconque des revendications précédentes, dans laquelle le diaphragme (54) comprend en outre un socle (56) au niveau duquel le conduit (62) débouche en son extrémité d'entrée (64).

10. Buse (24) selon la revendication 9, dans laquelle le socle (56) comprend au moins une encoche (78) ou un relief caractéristique de la forme et/ou de la longueur du conduit (62).

11. Buse (24) selon l'une quelconque des revendications 1 à 10, comprenant un corps (34) tubulaire orienté suivant une direction axiale (A-A') et définissant intérieurement un conduit (40) traversant débouchant sur un orifice de pulvérisation (42) apte à pulvériser le produit,
la buse (24) comprenant en outre un organe de pulvérisation (36) définissant l'orifice de pulvérisation (42) et comprenant, de l'amont vers l'aval, une cavité (46) de section transversale décroissante vers l'aval, suivie d'un canal (48) raccordant fluidiquement la cavité (46) à l'orifice de pulvérisation (42),
le diaphragme (54) étant logé au moins en partie dans le conduit (40) traversant de la buse (24).

12. Buse (24) selon la revendication 11, dans laquelle le diaphragme (54) est logé au moins en partie dans la cavité (46) de l'organe de pulvérisation (36), de préférence de manière amovible.

13. Buse (24) selon la revendication 11, dans laquelle le diaphragme (54) est logé en amont de l'organe de pulvérisation (36), de préférence de manière amovible.

14. Dispositif (8) d'application d'un produit de revêtement, tel qu'un pistolet, comportant une buse (24) de pulvérisation selon l'une quelconque des revendications 1 à 13.
